# EUROPEAN PATENT SPECIFICATION

(11) **EP 3 271 589 B1**
(45) Date of publication and mention of the grant of the patent: **06.09.2023**
(21) Application number: 16714119.1
(22) Date of filing: 15.03.2016
(51) Int. Cl.: F15B 1/02, F15B 3/00

(54) **FLUID POWER ACTUATOR FOR A PROCESS VALVE**
HYDRAULISCHER STELLANTRIEB FÜR EIN PROZESSVENTIL
ACTIONNEUR HYDRAULIQUE POUR UNE VANNE DE PROCÉDÉ INDUSTRIEL

(30) Priority: 19.03.2015 US 201514662672
(43) Date of publication of application: 24.01.2018
(73) Proprietor: Emerson Process Management Valve Automation, Inc., Houston TX 77072 (US)
(72) Inventor: LEBLANC, William, Kenneth, Mansfield, OH 44907 (US); HOKE, David, John, Richmond, TX 77406 (US)
(74) Representative: Himmelsbach, Mathias
(86) International application number: PCT/US2016/022433
(87) International publication number: WO 2016/149249

(56) References cited:
- CA-A- 1 237 627
- DE-U1- 20 119 416
- US-A1- 2005 178 560

## Description

### FIELD OF THE DISCLOSURE

The present disclosure relates generally to control valve assemblies comprising a control fluid power apparatus.

### BACKGROUND

Gas-over-oil control valve systems are often employed in process systems (e.g., offshore drilling wells, oil fields, natural gas transmission pipeline, etc.,) in remote locations where a power source (e.g., pneumatic or electrical power) may be unavailable. Specifically, gas-over-oil control valve system use high pressure process fluid flowing through a process fluid pipeline (e.g., natural gas) to provide energy to power a control valve (e.g., an actuator) instead of, for example, pneumatic or electrical power. In particular, a gas-over-oil system includes hydraulic control fluid stored in external vessels. The hydraulic control fluid is pressurized by channeling process fluid in a transmission pipeline directly over and in contact with the hydraulic control fluid, which forces the hydraulic fluid into the control valve (e.g., an actuator of the control valve).

However, known gas-over-oil control valve systems exhaust the pipeline process fluid (e.g., natural gas) to atmosphere after the hydraulic control fluid stokes the control valve. The exhausting fluid can produce loud noise and/or high velocity flow. In some instances, the pressure vessels have relatively large volumes and require approximately 15 to 20 seconds to fill and/or evacuate the process fluid from the pressure vessels. Further, gas-over-oil systems do not employ a fail-safe mechanism because these systems typically lack a spring. Additionally, the process fluid (e.g., the gas) directly engages the hydraulic oil in the pressure vessels without a barrier therebetween. Thus, impurities in the process fluid may contaminate the hydraulic fluid and may result in damage to the actuator and/or other components of the gas-over-oil systems.

CA 1 237 627 A discloses a valve actuator for a valve used on a gas pipe line. The valve actuator comprises solenoid valves which are connected through conduits to the gas pipe line. In operation, the solenoids are energized or de-energized to send the gas flowing through the pipe line directly to the corresponding cylinder chambers of the valve actuator through the solenoid valves or to send the gas to pressure vessels to pressurize the hydraulic fluid contained in the pressure vessels.

### SUMMARY

The object of the present invention is accomplished by a control valve assembly having a control fluid power apparatus according to claim 1. Preferred embodiment of the invention are defined in the dependent claims.

The control fluid power apparatus of the control valve assembly of the invention includes a first housing having a first piston defining a first chamber and a second chamber, where the first chamber receives a control fluid and the second chamber receives a process fluid from a process system. The first chamber is oriented above the second chamber. A second housing has a second piston defining a third chamber and a fourth chamber, where the third chamber receives the control fluid and the fourth chamber receives the process fluid. The third chamber is oriented above the fourth chamber.

Preferably, the control fluid power apparatus includes a rotary vane actuator having a vane defining a first cavity and a second cavity. The third chamber of the second accumulator is fluidly coupled to the first chamber of the first accumulator. A directional controller directs fluid flow between the first chamber of the first accumulator and at least one of the first cavity or the second cavity of the actuator.

### BRIEF DESCRIPTION OF THE DRAWINGS

FIG. 1 illustrates an embodiment of a control valve assembly according to the invention with an embodiment of a control fluid power apparatus.
FIG. 2 is a schematic illustration of the embodiment of FIG. 1 showing the control fluid power apparatus in a fully charged state
FIG. 3 is a schematic illustration of the embodiment of FIGS. 1 and 2 showing the control fluid power apparatus in a partially discharged state
FIG. 4 is a schematic illustration of the embodiment of FIGS. 1-3 showing the control fluid power apparatus in a fully discharged state
FIG. 5 is a schematic illustration of the embodiment of FIGS. 1-4 showing the control fluid power apparatus in a partially recharged state

### DETAILED DESCRIPTION

The control valve assembly disclosed herein may be used in remote locations (e.g., where pneumatic or electrical power may be unavailable) to provide power (e.g., hydraulic power) to a valve actuator of a process system. Specifically, like gas-over-oil systems, the control valve assembly disclosed herein uses a pressurized process fluid (e.g., natural gas) to pressurize and/or deliver a pressurized control fluid to the process system component during operation. However, unlike conventional gas-over-oil systems, the control valve assembly disclosed herein does not exhaust the process fluid to the atmosphere. Instead, any process fluid used by the control valve assembly disclosed herein flows back to the original source of the fluid or the process fluid pipeline. Thus, the control valve assembly exhausts substantially zero process fluid emissions.

Further, unlike many known gas-over-oil systems, the control valve assembly disclosed herein includes one or more accumulator apparatus to provide, for example, energy storage, energy accumulation, etc. For example, a control fluid power apparatus disclosed herein may be used to store energy such as a pressurized control fluid. For example, a control fluid power apparatus disclosed herein may be used to store pressurized hydraulic fluid provided by a hydraulic pump when a hydraulic system demand is low (e.g., a hydraulic actuator is not being actuated) and to supply such previously stored pressurized hydraulic fluid when demand of the hydraulic system increases (e.g., the hydraulic actuator is being actuated). However, unlike known accumulators, the accumulators used to implement the example control fluid power apparatus described herein do not require use of a pre-charged gas (e.g., inert gas such as nitrogen). On the contrary, the example control fluid power apparatus disclosed herein employ accumulator apparatus that are charged and/or operated using a pressure of a process fluid (e.g., natural gas) of a distribution system to which the example control fluid power apparatus is fluidly coupled.

Additionally, because a transmission pipeline containing the process fluid has a volume significantly greater than a volume of a control fluid contained by the example control fluid power apparatus disclosed herein, an operating pressure of the example control fluid power apparatus disclosed herein remains relatively constant (e.g., a change of plus or minus approximately 5 psi) during a cycling or operation of a process system component or equipment. In other words, the relatively large volume of process fluid in a pipeline and its pressure remains substantially constant (e.g., remains within one psi) when the example control fluid power apparatus disclosed herein operates between a fully charged state (e.g., when the control fluid power apparatus is pressured and ready to power the process system component or actuator) and a fully discharged state (e.g., when the control power apparatus provides control fluid to a process system component or actuator). As a result, the constant pressure is effective in producing a constant or fixed torque output throughout the operation of the example control fluid power apparatus disclosed herein. For example, the control fluid power apparatus disclosed herein provides a constant torque output throughout a stroke (e.g., an entire stroke) of an actuator of a control valve as the actuator moves between a first position and a second position. In this manner, the actuator is capable of stroking rapidly between an initial stroke position and an end stroke position (e.g., between approximately one and three seconds).

In some examples, a control fluid power apparatus disclosed herein may employ a thermal volume controller. In some examples, the thermal volume controller ensures that the control fluid power apparatus is fully charged or filled with a control fluid during a recharging operation. For example, the thermal volume controller operates an electric switch to activate and deactivate a motor and a pump that fill or charge the control fluid power apparatus with a control fluid. Furthermore, in some examples, the thermal volume controller may compensate and/or adjust for pressure variations and/or fluctuations in a process fluid pipeline. As a result, unlike conventional electro-hydraulic systems, the example thermal volume controller disclosed herein eliminates the need for pressure switches to operate a motor and/or pump. Conventional pressure switches require re-calibration or re-adjustment as pressure of process fluid changes or fluctuates in the pipeline. In contrast, the example thermal volume controller described herein does not require any adjustment because the thermal volume controller automatically adjusts and/or compensates for pressure fluctuations of the process fluid in the pipeline. Additionally, the example thermal volume controller disclosed herein may compensate for thermal expansion and/or pressure variations of a control fluid of the example control fluid power apparatus due to temperature variations (e.g., diurnal temperature variations).

Additionally, unlike conventional hydro-electric systems and/or gas-over-oil systems, the example control fluid power apparatus disclosed herein are oriented in a manner where a control fluid (e.g., a hydraulic fluid) is positioned over (e.g., topside) of the process fluid (e.g., natural gas) As a result, the attitude and/or orientation of the process fluid causes impurities and/or contaminates in the process fluid to gravitate or flow back into the process fluid pipeline via gravity when the process fluid is exhausted from the control fluid power apparatus. In some examples, wetted components of the example control fluid power apparatus may be coated with a material (e.g., Teflon or a non-sticking agent) to further help direct impurities and/or contaminates in the process fluid toward the pipeline and out of the control fluid power apparatus, thereby increasing the operational life of the control fluid power apparatus.

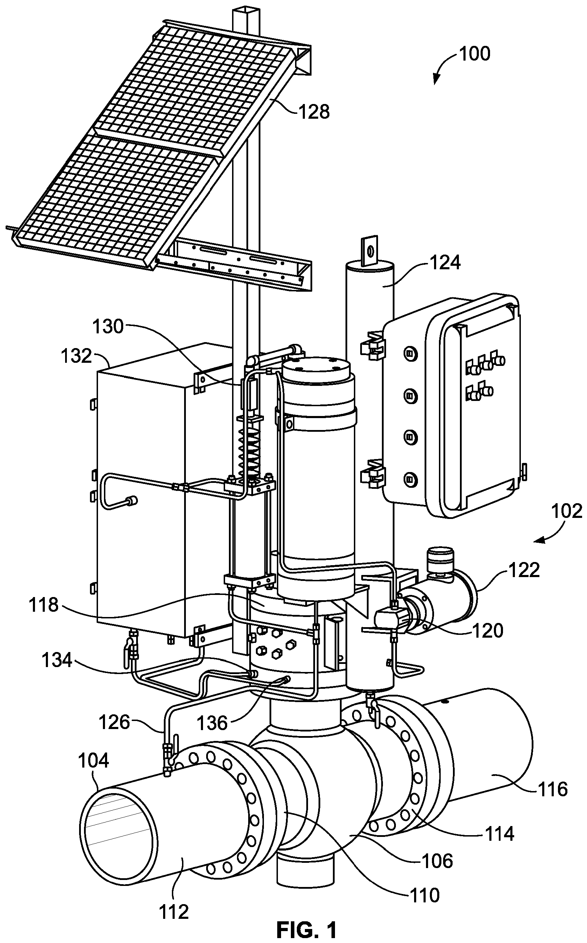

FIG. 1 illustrates an embodiment of the control valve assembly 100 having a control fluid power apparatus 102 constructed in accordance with the invention. The control valve assembly 100 is coupled to a pipeline 104. The control valve assembly 100 of the illustrated example includes a valve 106 (e.g., a quarter turn ball valve) to control fluid flow through the pipeline 104. Specifically, the valve 106 of the illustrated example defines a fluid flow passageway between an inlet 110 fluidly coupled to a first portion 112 of the pipeline 104 and an outlet 114 fluidly coupled to a second portion 116 of the pipeline 104. A fluid control member (e.g., a ball valve) is interposed in the fluid flow passageway to control fluid flow between the inlet 110 and the outlet 114. To move the fluid control member, the control valve assembly 100 of the illustrated example includes an actuator 118 (e.g., a quarter turn or 90 degree rotatable actuator). For example, the actuator 118 of the illustrated example is operatively coupled to the fluid control member (e.g., via a valve shaft) and moves the flow control member between a first position (e.g., a fully open position) to allow fluid flow between the inlet 110 and the outlet 114 and a second position (e.g., a fully closed position) to restrict or prevent fluid flow between the inlet 110 and the outlet 114.

The actuator 118 of the illustrated example is a hydraulic actuator (e.g., a hydraulic rotary vane actuator). A pump 120 (e.g., a hydraulic pump) operated by a motor 122 (e.g., an electric motor) supplies control fluid (e.g., pressurized hydraulic fluid) from a reservoir 124 to the control fluid power apparatus 102. The control fluid power apparatus 102 employs pressurized process fluid (e.g., natural gas) from the pipeline 104 to provide pressure sufficient to cause the control fluid to operate the actuator 118 through a complete stroke of the actuator 118. For example, the control fluid power apparatus 102 is fluidly coupled to the process fluid upstream from the inlet 110 via a pressure line 126 (e.g., tubing).

In the illustrated example, a solar panel assembly 128 provides electrical power to the motor 122. However, in some examples, the control valve assembly 100 may receive electrical power via an electrical grid system (e.g., utility power grid). In the illustrated example, the motor 122 is activated or deactivated via an electric motor control switch 130 that is operated by the control fluid power apparatus 102. The example control valve assembly 100 employs a directional controller 132 to direct the control fluid from the control fluid power apparatus 102 to different ports 134 and 136 of the actuator 118 to control a stroke direction of the actuator 118. The directional controller 132 may receive a signal from a remote location (e.g., a control room) or may be operated locally via manual knobs and/or a hand pump. For example, a technician can operate the directional controller 132 when servicing the control valve assembly 100.

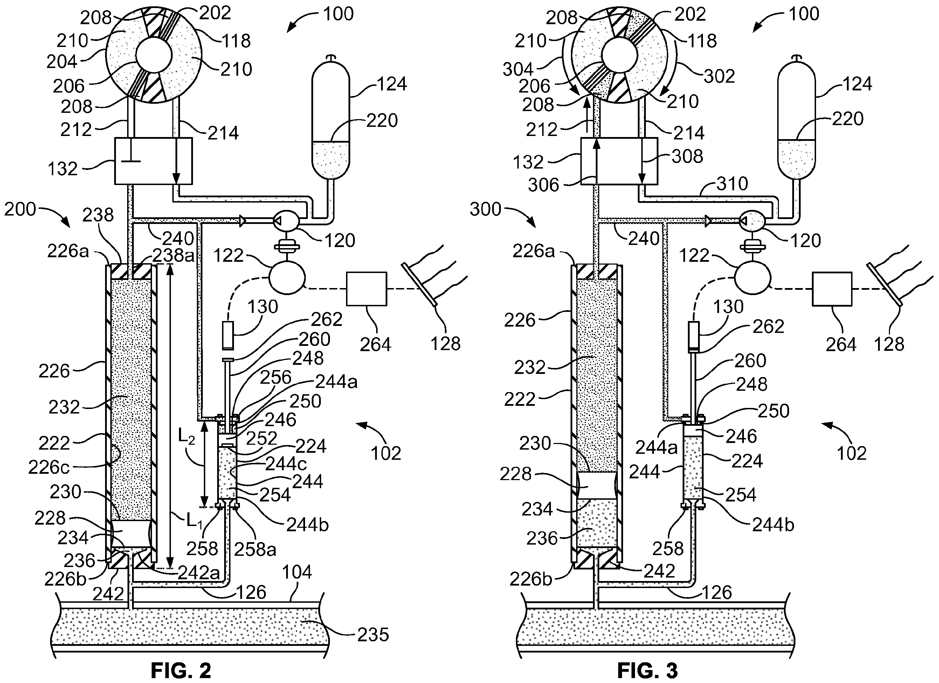

FIG. 2 is a schematic illustration of the example fluid control valve assembly 100 shown in FIG. 1 showing the control fluid power apparatus 102 in a charged (e.g., a fully charged) condition or state 200. As shown in FIG. 2, the actuator 118 of the illustrated example includes a vane 202 movable or rotatable within a housing 204 of the actuator 118. The vane 202 is coupled to a valve shaft 206 which, in turn, is coupled to a valve plug (e.g., a ball valve) of the valve 106 (FIG. 1). The vane 202 and the actuator housing 204 define a first cavity or chamber 208 and a second cavity or chamber 210. A first line 212 (e.g., tubing) fluidly couples the first chamber 208 to the directional controller 132 and a second line 214 (e.g., tubing) fluidly couples the second chamber 210 to the directional controller 132. To operate the actuator 118, the directional controller 132 directs a control fluid 220 from the control fluid power apparatus 102 to either the first chamber 208 of the actuator 118 or the second chamber 210 of the actuator 118. In the fully charged state 200 shown in FIG. 2, the directional controller 132 isolates the control fluid power apparatus 102 (i.e., the control fluid 220) from the actuator 118.

As shown in FIG. 2, the control fluid power apparatus 102 includes a first accumulator 222 (e.g., a hydraulic accumulator) and a second accumulator 224 (e.g., a thermal volume controller). The example first accumulator 222 includes a first housing 226 (e.g., a cylindrical body or cylinder) having a length Li. A first piston 228 is disposed within the first housing 226 such that a first side 230 of the first piston 228 and the first housing 226 defines a control fluid side or a first chamber 232 of the first accumulator 222 and a second side 234 of the first piston 228 and the first housing 226 define a process fluid side or a second chamber 236 (e.g., a gas chamber) of the first accumulator 222. In the illustrated example, the first side 230 of the first piston 228 has a first area that is substantially equal (e.g., identical) to a second area of the second side 234 of the first piston 228. The first piston 228 includes a seal (e.g., a T-seal) to prevent unwanted leakage of control fluid and/or process fluid past the first piston 228 between the first and second chambers 232 and 236.

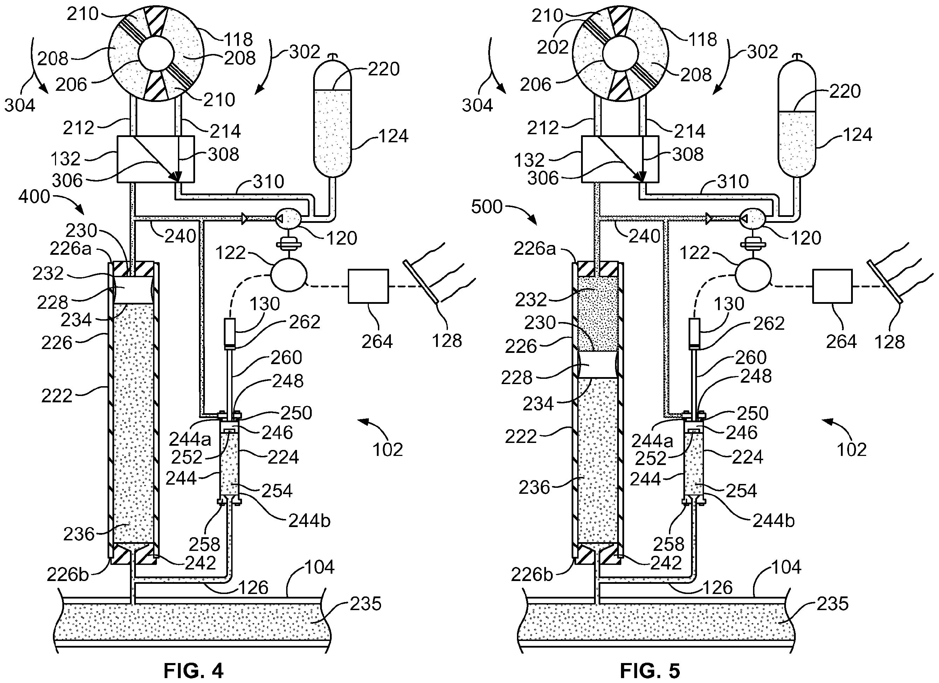

The first chamber 232, for example, receives the control fluid 220 (e.g., an incompressible fluid, a hydraulic fluid, etc.) and the second chamber 236 receives a process fluid 235 (e.g., a compressible fluid, natural gas, etc.) or other pressurized fluid flowing through the pipeline 104. The first piston 228 moves in a rectilinear manner along a longitudinal axis of the first housing 226 between a first position at which the first chamber 232 has a maximum volume and the second chamber 236 has a minimum volume (e.g., the fully charged position 200 as shown in FIG. 2), and a second position at which the first chamber 232 has a minimum volume and the second chamber 236 has a maximum volume (e.g., a fully discharged position 400 as shown in FIG. 4).

In the illustrated example, a first end 226a the first housing 226 includes a first end cap 238 adjacent the first chamber 232 and fluidly couples the first chamber 232 to a control fluid supply line 240. A second end 226b of the first housing 226 includes a second end cap 242 adjacent the second chamber 234 and fluidly couples the second chamber 234 to the process fluid 235 flowing through the pipeline 104 via the pressure line 126. The first end cap 238 and/or the second end cap 242 are removably coupled (e.g., via threads or fasteners such as bolts) to the first housing 226. However, in some examples, the first end cap 238 and/or the second end cap 242 may be integrally formed with the first housing 226.

The example second accumulator 224 includes a second housing 244 (e.g., a cylindrical body or cylinder) having a length L₂. The volume and length L₂ of the second accumulator 224 is significantly less than (e.g., 10% of) a volume and/or the length Li of the first accumulator 222. A second piston 246 is disposed within the second housing 244 and has a first side 248 defining a control fluid side or a first chamber 250 and a second side 252 opposite the first side 248 defining a process fluid side or a second chamber 254 (i.e., a gas chamber) of the second accumulator 224. The second piston 246 of the illustrated example includes a seal to prevent unwanted leakage of the control fluid 220 and/or the process fluid 235 past the second piston 246 between the first and second chambers 250 and 254. The second piston 246 moves in a rectilinear manner along a longitudinal axis of the second housing 244 between a first position (e.g., as shown in the fully charged state 200 in FIG. 2) and a second position (e.g., as shown in the fully discharged state 400 in FIG. 4). The first chamber 250 receives the control fluid 220 and the second chamber 254 receives the process fluid 235.

In the illustrated example, a first end 244a of the second housing 244 has a first end cap 256 that fluidly couples the first chamber 250 of the second accumulator 224 to the supply line 240. In particular, the supply line 240 fluidly couples the first chamber 232 of the first accumulator 222 and the first chamber 250 of the second accumulator 224. In this example, a second end 244b of the second housing 244 has a second end cap 258 adjacent the second chamber 254 and fluidly couples the second chamber 254 to the process fluid 235 via the pressure line 126. The first end cap 256 and/or the second end cap 258 are removably coupled (e.g., via threads or fasteners such as bolts) to the second housing 244. However, in some examples, the first end cap 256 and/or the second end cap 258 may be integrally formed with the second housing 244.

The second accumulator 244 of the illustrated example includes a shaft or rod 260 coupled to the first side 248 of the second piston 246. Due to the rod 260, the first side 248 of the second piston 246 has a first area that is less than a second area of the second side 252 of the second piston 246. Additionally, the rod 260 of the illustrated example includes a switch activator or target 262 that moves relative to the switch 130 to activate and/or deactivate the motor 122 and, thus, the pump 120. The target 262 of the illustrated example is composed of a ferrous or magnetic material and the switch 130 of the illustrated example is a proximity switch. Thus, activation and/or deactivation of the switch 130 may occur without direct engagement of the target 262 with the switch 130. For example, the rod 260 may activate and/or deactivate the motor 122 when the target 262 is in proximity (e.g., a quarter of an inch) relative to the switch 130 without directly engaging or contacting with the switch 130. A battery 264 is charged via the solar panels and supplies power to the motor 122 when the switch 130 is activated by the rod 260.

In the illustrated example, to facilitate impurities and/or contaminates (e.g., particle contaminates, hydrocarbon liquids, corrosive elements such as hydrogen sulfide, etc.) in the process fluid 235 to flow back to the pipeline 104, the first and second accumulators 222 and 224 of the illustrated example have a substantially vertical attitude or orientation, for example, relative to the ground or Earth. The attitude or orientation of each of the first and second accumulators 222 and 224 is such that the respective first chambers 232 and 250 are positioned above or topside the respective second chambers 236 and 254 when the control fluid power apparatus 102 is coupled to the control valve assembly 100. Specifically, the second chamber 236 of the first accumulator 222 is positioned between the first chamber 232 of the first accumulator 222 and the pipeline 104. Also, the second chamber 236 of the first accumulator 222 of the illustrated example is positioned above the pipeline 104. Similarly, the second chamber 254 of the second accumulator 224 is positioned between the first chamber 250 of the second accumulator 224 and the pipeline 104. Also, the second chamber 236 of the second accumulator 224 is positioned above the pipeline 104. Unlike many known gas-over-oil systems in which the process fluid or gas (natural gas) fills a reservoir from a top end and pushes a control fluid or hydraulic fluid through a bottom end of a reservoir (i.e., when the reservoir is in a vertical orientation), the example control fluid power apparatus 102 of the illustrated example orients the control fluid 220 topside relative to the process fluid 235. Such an attitude or orientation of the process fluid 235 facilitates gravitation of contaminates or impurities in the respective second chambers 236 and 254 back into the pipeline 104. Such a configuration significantly increases the life of the first and second accumulators 222 and 224 by significantly reducing damage to the first and second housings 226 and 244 and/or other components (e.g., the piston) wetted by the process fluid 235 due to, for example, corrosion, scoring and/or scratching.

Additionally, to facilitate gravitation of contaminates or impurities from the second chamber 232 of the first accumulator 222 back to the pipeline 104 when the first piston 228 moves toward the second end 226b of the first housing 226, the second end cap 242 of the illustrated example has a bore or opening 242a having a tapered or slanted profile or shape. Likewise, the second end cap 258 of the second accumulator 224 has a bore or opening 258a having tapered or slanted profile or shape to facilitate impurities or contaminates in the process fluid to be channeled back to the pipeline 104. However, in other examples, the second end cap 242 and/or the second end cap 258 do not include the tapered portions.

To further assist in increasing the life of the accumulators 222 and 224, an inner wall 226c of the first housing 226, an inner wall 244c of the second housing 244 and/or other process fluid wetted components (e.g., the first piston 228, the second piston 246, etc.) may be coated with a material (e.g., Teflon, etc.) to facilitate removal of contaminants in the process fluid 235.

When the first accumulator 222 is in the fully charged state 200 as shown in FIG. 2, the first chamber 232 of the first accumulator 222 has a maximum volume of control fluid 220 and the second chamber 236 has a minimum volume of the process fluid 235. For example, in the fully charged state 200, the first piston 228 is positioned adjacent the second end 226b and/or in engagement with the second end cap 242 of the first housing 226. In other words, the second chamber 236 has a substantially zero volume (e.g., no natural gas is stored in the second chamber 236). The second piston 246 is positioned between the first and second ends 244a and 244b such that the first chamber 250 contains a volume of the control fluid 220 and the second chamber 254 contains a volume of the process fluid 235. However, the rod 260 of the second accumulator 224 is spaced away from the switch 130 to deactivate the motor 122 and the pump 120.

In the fully charged state 200, the second accumulator 224 of the illustrated example isolates and/or protects the control fluid power apparatus 102 (e.g., the first and second housings 226, 244, the supply line 240, the pump 120, etc.) from pressure increases caused by thermal expansions in the control fluid 220 due to ambient temperature changes or fluctuations (e.g., diurnal temperature variations). For example, a control fluid composed of hydraulic oil may expand at a rate of 4% per 100 degrees Fahrenheit change in temperature. Thus, in some instances, when the pressure of the control fluid 220 in the first chamber 232 of the first accumulator 222 and/or the second chamber 250 of the second accumulator 224 increases due to an increase in temperature, the second piston 246 of the second accumulator 224 moves further toward the second end 246b of the second housing 244 to increase a volume of the first chamber 250 and displaces an amount or volume of the process fluid 235 in the second chamber 254 back into the pipeline 104 via the pressure line 126. The second accumulator 224 accommodates or compensates for thermal expansion of the control fluid 220 in the first accumulator 222 because the respective first chambers 232 and 250 are fluidly coupled via the supply line 240. Similarly, when the pressure of the control fluid 220 decreases due to thermal contraction, the pressurized process fluid 235 causes the second piston 246 to move toward the first end 244a of the second housing 244. Further, thermal expansion of the process fluid 235 in the pipeline 104 is negligible due to a vast quantity of the process fluid 235 relative to the control fluid 220.

FIG. 3 illustrates the example control valve assembly 100 of FIGS. 1 and 2 shown in a partially discharged state or discharge mode 300 to operate the actuator 118. To operate the actuator 118, the directional controller 132 of the illustrated example receives one or more signals to operate one or more valves (e.g., solenoid valves) of the directional controller 132. For example, the directional controller 132 directs the control fluid 220 from the first accumulator 222 into the first chamber 208 of the actuator 118 to move or stroke the actuator 118 in a first direction 302 (e.g., a clockwise direction in the orientation of FIG. 3) or directs the control fluid 220 from the first accumulator 222 into the second chamber 210 of the actuator 118 to move the actuator 118 in a second direction 304 opposite the first direction 302 (e.g., a counterclockwise direction in the orientation of FIG. 3).

For example, FIG. 3 illustrates the directional controller 132 configured to allow movement of the actuator 118 in the first direction 302 to move the flow control member of the valve 106 (FIG. 1) from a first position (e.g., a fully open position) to a second position (e.g., a fully closed position). To move the actuator 118 in the first direction 302, the directional controller 132 operates a first valve 306 to allow fluid flow between the supply line 240 and the first chamber 208 of the actuator 118 via the first line 212. Additionally, the directional controller 132 operates a second valve 308 to allow fluid flow from the second chamber 210 of the actuator 118 to the reservoir 124 via the second line 214 and a return line 310. Thus, as the first chamber 208 of the actuator 118 is pressurized or filled with the control fluid 220, the control fluid 220 in the second chamber 210 of the actuator 118 flows to the reservoir 124 via the return line 310.

In operation, when the directional controller 132 fluidly couples the supply line 240 and the first chamber 208 of the actuator 118, the pressure in the first chamber 208 of the actuator 118 is less than the pressure of the control fluid 220 in the first chambers 232 and 250 of the respective first and second accumulators 222 and 224, causing the control fluid 220 to flow to the first chamber 208 of the actuator 118. In particular, the control fluid 220 in the first chamber 250 of the second accumulator 224 discharges to the first chamber 208 of the actuator 118 prior to the control fluid 220 in the first chamber 232 of the first accumulator 222. More specifically, the second piston 246 moves prior to the first piston 228 because a greater pressure differential is sensed by the second piston 246 than the first piston 228 given that the first area of the first side 256 of the second piston 246 is less than the second area of the second side 252 of the second piston 246 (i.e., due to the rod 260 as noted above) and the first area of the first side 230 of the first piston 228 is substantially equal to the second area of the second side 234 of the first piston 228. In other words, the pressure differential across the second piston 246 provides a path of least resistance given that the pressure of the process fluid 235 in the second chamber 254 is greater than the pressure of the control fluid 220 in the first chamber 250 at the time of fluid communication with the first chamber 208 of the actuator 118, thereby causing the second piston 246 to move toward the first end 244a of the second housing 244 prior to the first piston 228 of the first accumulator 222 moving toward the first end 226a of the first housing 266. As a result, the control fluid 220 in the first chamber 250 of the second accumulator 224 discharges to the first chamber 208 of the actuator 118 prior to discharge of the control fluid 220 in the first chamber 232 of the first accumulator 222.

Once the control fluid 220 is fully discharged from the first chamber 250 of the second accumulator 224, the control fluid 220 in the first chamber 232 of the first accumulator 222 then flows to the first chamber 208 of the actuator 118. As the volume of control fluid 220 in the first chamber 232 of the first accumulator 222 decreases as the control fluid 220 flows to the first chamber 208 of the actuator 118, the volume of the process fluid 235 in the second chamber 236 of the first accumulator 222 increases. In turn, the pressurized process fluid 235 applies a force to the second side 234 of the first piston 228 that is greater than a force provided to the first side 230 of the first piston 228 by the control fluid 220, causing the first piston 228 to move toward the first end 226a of the first housing 226. In other words, the pressure of the process fluid 235 provides a head pressure to the first accumulator 222 to discharge the pressurized control fluid 220 from the first chamber 232 of the first accumulator 222 and into the first chamber 208 of the actuator 118 to rotate the vane 202 in the first direction 302.

As the vane 202 moves or rotates within the actuator housing 204 in the first direction 302, the vane 202 causes a volume of the first chamber 208 to increase and a volume of the second chamber 210 to decrease. In turn, the vane 202 causes the valve shaft 206 to rotate in the first direction 302, which causes the valve plug of the valve 106 to move from a first position (e.g., a fully open position) to a second position (e.g., a fully closed position). Further, the pressure of the process fluid remains substantially constant (e.g., within 1 psi) during a stroke (e.g., a complete stroke) of the actuator 118 (e.g., the vane 202 moving the first position to the second position). In other words, the process fluid 235 provides a constant pressure during a discharge (e.g., a full discharge) of the control fluid 220 from the first chamber 232 of the first accumulator 222 (i.e., as the first piston moves from the second end 226b toward the first end 226a), thereby enabling the control fluid 220 to provide a constant torque or force to the actuator 118 throughout a stroke length (e.g., an entire stroke) of the actuator 118. For example, a constant torque is applied to the vane 202 as the vane moves from a first position shown in FIG. 2 to a second position shown in FIG. 4.

FIG. 4 illustrates the fluid control apparatus 102 of FIGS. 1-3 in a fully discharged state or condition 400. In the fully discharged state 400, the volume of the first chamber 232 of the first accumulator 222 is at a minimum and the volume of the second chamber 236 is at a maximum. Likewise, the volume of the first chamber 250 of the first accumulator 222 is at a minimum and the volume of the second chamber 254 is at a maximum. In other words, the first piston 228 of the first accumulator 222 is adjacent and/or in direct engagement with the first end cap 238 and the second piston 246 of the second accumulator 224 is adjacent and/or in direct engagement with the first end cap 256 of the second accumulator 224. Further, the target 262 of the rod 260 is positioned to continue activation of the motor 122 and the pump 120.

FIG. 5 illustrates fluid control apparatus 100 of FIG. 2 in a partially recharged state or a recharging mode 500. After the vane 202 of the actuator 118 is moved to the second position (e.g., as shown in FIGS. 4 and 5), demand for the control fluid 220 decreases and the directional controller 132 receives a signal to fluidly decouple the supply line 240 of the control fluid power apparatus 102 from the actuator 118. For example, to recharge the first accumulator 222 with the control fluid 220, the directional controller causes the first valve 306 to fluidly couple the first line 212 and the return line 310. Likewise, the directional controller 132 causes the second valve 308 to fluidly couple the second line 214 and the return line 310. In other words, the supply line 240 downstream of the pump 120 is isolated from the first and second chambers 208 and 210 of the actuator 108. Thus, the supply line 240 is only fluidly coupled to the first chambers 232 and 250 of the respective first and second accumulators 222 and 224.

Additionally, the motor 122 and the pump 120 are activated by the position of the rod 260 of the second accumulator 224 relative to the switch 130. For example, when the second piston 246 of the second accumulator 224 moves toward the first end 244a of the second housing 244, the rod 260 moves toward the switch 130 and activates the switch 130. For example, the rod 260 and/or the target 262 activates the switch 130 when the rod 260 and/or the target 262 moves in proximity to the switch 130 (e.g., within a distance of a quarter inch of the switch 130). As a result, the motor 122 activates and drives the pump 120. As a result, the pump 120 charges and/or pressurizes the control fluid 220 from the reservoir 124 and provides the pressurized control fluid to flow into the first chambers 232 and 250 of the respective first and second accumulators 222 and 224 via the supply line 240. In particular, a pressure of the control fluid 220 provided by the pump 120 is greater than a pressure of the process fluid 235 in the second chambers 236 and 254 of the respective first and second accumulators 222 and 224.

Additionally, the pressure differential across the first piston 228 is less than a pressure differential across the second piston 246 given that the first area of the first side 248 of the second piston 246 is less than the second area of the second side 252 of the second piston 246, and the first area of the first side 230 of the first piston 228 is substantially equal to the second area of the second side 234 of the first piston 228. Thus, the force provided by the pressurized control fluid 220 to the first side 248 of the second piston 246 is less than a force provided by the pressurized control fluid 220 to the first side 230 of the first piston 228. As a result, a path of least resistance is provided between the pump 120 and the first chamber 232 of the first accumulator 222. Thus, the first piston 228 moves toward the second end 226b of the first housing 226 prior to the second piston 246 moving toward the second end 244a of the second housing 244. In other words, the first chamber 232 of the first accumulator 222 fills (e.g., completely fills as shown in FIG. 1) prior to the first chamber 250 of the second accumulator 224 begins to move. Thus, the second accumulator 224 is configured to enable the first chamber 250 of the second accumulator 224 to discharge prior to the control fluid 220 in the first chamber 232 of the first accumulator 222 during a discharge state (e.g., the discharge state 300 of FIG. 3) and receives the control fluid 220 after the first chamber 232 of the first accumulator 222 during the recharging state 500. This ensures that the switch 130 is activated until the first chamber 232 of the first accumulator 222 is in the fully charged state 200 of FIG. 2. In other examples, a valve (e.g., a solenoid valve) may be positioned between the first chamber 250 of the second accumulator 224 and the pump 120 and/or the first chamber 232 of the first accumulator 222 to cause the control fluid 220 to completely fill the first chamber 232 of the first accumulator 222 prior to the control fluid 220 flowing to and/or filing the first chamber 250 of the second accumulator 224 during a recharging process.

In turn, during the recharging state 500, the pressurized control fluid 220 exerts a force on the first side 230 of the first piston 228 via the first chamber 232 that is greater than the force applied to the second side 234 of the first piston 228 by the pressurized process fluid 235 in the second chamber 236, thereby causing the first piston 228 to move toward the second end 226b of the first housing 226. As the first piston 228 of the first accumulator 222 moves toward the second end 226b of the first housing 226 and the first chamber 232 fills with the control fluid 220, the volume of the first chamber 232 increases as the first chamber 232 accumulates a greater volume of pressurized control fluid 220. At the same time, the volume of the second chamber 236 decreases and the process fluid 235 in the second chamber 236 returns to the pipeline 104 via the pressure line 126. Thus, none of the process fluid 235 in the second chamber 236 of the first accumulator 222 is exhausted to the atmosphere. Additionally, the second end cap 242, the coated inner surface 226c and/or coated components (e.g., the first piston 228) and/or the attitude or orientation of the first accumulator 222 facilitate the movement of impurities and contaminants back into the pipeline 104, thereby increasing the operational life of the first accumulator 222.

After the first accumulator 222 is fully charged (e.g., the first chamber 232 is at a maximum volume as shown in FIG. 2), the pressurized control fluid 220 flows to the first chamber 250 of the second accumulator 224, causing the second piston 246 to move toward the second end 244b of the second housing 244. The second piston 246 of the second accumulator 224 moves a distance toward the second end 244b of the second housing 244 until the rod 260 and/or the target 262 moves a distance away (e.g., greater than approximately a quarter of an inch) from the switch 130 sufficient to deactivate the motor 122 and the pump 120. Similar to the first accumulator 222, any process fluid 235 displaced from the second chamber 254 of the second accumulator 224 is returned to the pipeline 104 via the pressure line 126 and none of the process fluid 235 in the second chamber 254 is exhausted to atmosphere. The second end cap 258, the coated inner surface 244c and/or coated components (e.g., the second piston 246) and/or the attitude or orientation of the second accumulator 224 facilitate the movement of impurities and contaminants back into the pipeline 104, thereby increasing the operational life of the second accumulator 224.

When the motor 122 shuts off, the control fluid power apparatus 102 is recharged and ready for the next stroke cycle of the actuator 118. To operate the vane 202 in the second direction 304, the directional controller 132 directs the second valve 308 to fluidly couple the second line 214 to the supply line 240 and the directs the first valve 306 to fluidly couple the first line 212 to the return line 310. When the vane 202 moves or rotates within the actuator housing 204 in the second direction 304 (e.g., a counterclockwise direction) opposite the first direction 302, the vane 202 causes the volume of the second chamber 210 to increase and the volume of the first chamber 208 to decrease to cause the valve shaft 206 to rotate in the second direction 304, thereby causing the valve 106 to move from the second position to the first position.

Although certain example apparatus, methods, and articles of manufacture have been described herein, the scope of coverage of this patent is not limited thereto. On the contrary, this patent covers all apparatus falling within the scope of the appended claims.

## Claims

1. A control valve assembly (100) comprising:
a process fluid pipeline (104);
a valve (106) to control a process fluid flow through the pipeline (104);
an actuator (118) for actuating the valve (106);
a control fluid power apparatus (102) for operating the actuator (118),
the control fluid power apparatus (102) comprising:
a first housing (226) having a first piston (228) defining a first chamber (232) and a second chamber (236), the first chamber (232) to receive a control fluid (220) and the second chamber (236) to receive the process fluid (235) from the process fluid pipe line (104), the first chamber (232) being w oriented above the second chamber (236); and
a second housing (244) having a second piston (246) defining a third chamber (250) and a fourth chamber (254), the third chamber (250) to receive the control fluid (220) and the fourth chamber (254) is to receive the process fluid (235), the third chamber (250) being oriented above the fourth chamber (254).

2. The control valve assembly (100) of claim 1, wherein the first housing (226) and the second housing (244) are arranged in a substantially vertical orientation.

3. The control valve assembly (100) of claim 2, wherein the second chamber (236) of the first housing (226) is positioned between the first chamber (232) of the first housing (226) and the pipeline (104) of the process system, and the fourth chamber (254) of the second housing (244) is positioned between the third chamber (250) of the second housing (244) and the pipeline (104).

4. The control valve assembly (100) of any one of the preceding claims, wherein a pressure differential across the first piston provided by the control fluid (220) and the process fluid (235) is to cause the first piston to move between a first position and a second position.

5. The control valve assembly (100) of any one of the preceding claims, wherein the third chamber (250) of the second housing (244) is fluidly coupled to the first chamber (232) of the first housing (226).

6. The control valve assembly (100) of any one of the preceding claims, further comprising a motor (122) and a pump (120) to recharge the first chamber (232) of the first housing (226) when the first chamber (232) is discharged.

7. The control valve assembly (100) of any one of claims 1-5, further comprising a switch activator (262) coupled to the second piston (246) to activate a switch to operate a motor (122) and a pump (120) when the volume of the first chamber (232) of the first housing (226) is at a minimum.

8. The control valve assembly (100) of any one of the preceding claims, wherein the first housing (226) has a first end cap (238) coupled to a first end (226a) adjacent the first chamber (232) and a second end cap (242) coupled to a second end (226b) adjacent the second chamber (234), the second end cap (242) having a tapered profile or shape.

9. The control valve assembly (100) of any one of the preceding claims, wherein a first area of a first side of the first piston (228) is substantially equal to a second area of a second side of the first piston (228).

10. The control valve assembly (100) of claim 9, wherein a third area of a third side of the second piston (246) is less than a fourth area of a fourth side of the second piston (246).

11. The control valve assembly (100) of any one of preceding claims, wherein the actuator (118) is a rotary vane actuator having a vane (202) defining a first cavity and a second cavity, further comprising:
a directional controller (132) to direct fluid flow between the first chamber (232) of the first housing (226) and at least one of the first cavity or the second cavity of the actuator (118);
wherein the third chamber (250) of the second housing (244) is fluidly coupled to the first chamber (232) of the first housing (226).

12. The control valve assembly (100) of claim 11, wherein the directional controller (132) prevents control fluid (220) in the first chamber (232) of the first housing (226) and the third chamber (250) of the second housing (244) from flowing to at least one of the first cavity or the second cavity of the actuator to recharge the first chamber (232) of the first Housing (226) with the pressurized control fluid (220).

13. The control valve assembly (100) of any one of the previous claims, wherein the first and second chambers (236) of the first housing (226) and the third and fourth chambers (250, 254) of the second housing (244) are positioned above the process fluid pipeline (104).

## Patentansprüche

1. Steuerventilanordnung (100), die Folgendes umfasst:
eine Prozessfluid-Pipeline (104);
ein Ventil (106) zum Steuern eines Prozessfluid-Durchflusses durch die Pipeline (104);
einen Aktor (118) zum Betätigen des Ventils (106);
eine Steuerfluid-Antriebsvorrichtung (102) zum Betätigen des Aktors (118),
wobei die Steuerfluid-Antriebsvorrichtung (102) Folgendes umfasst:
ein erstes Gehäuse (226) mit einem ersten Kolben (228), der eine erste Kammer (232) und eine zweite Kammer (236) definiert, wobei die erste Kammer (232) dafür ausgelegt ist, ein Steuerfluid (220) aufzunehmen, und die zweite Kammer (236) dafür ausgelegt ist, das Prozessfluid (235) von der Prozessfluid-Pipeline (104) aufzunehmen, wobei die erste Kammer (232) über der zweiten Kammer (236) angeordnet ist; und
ein zweites Gehäuse (244) mit einem zweiten Kolben (246), der eine dritte Kammer (250) und eine vierte Kammer (254) definiert, wobei die dritte Kammer (250) dafür ausgelegt ist, das Steuerfluid (220) aufzunehmen, und die vierte Kammer (254) dafür ausgelegt ist, das Prozessfluid (235) aufzunehmen, wobei die dritte Kammer (250) über der vierten Kammer (254) angeordnet ist.

2. Steuerventilanordnung (100) nach Anspruch 1, wobei das erste Gehäuse (226) und das zweite Gehäuse (244) in einer im Wesentlichen vertikalen Orientierung angeordnet sind.

3. Steuerventilanordnung (100) nach Anspruch 2, wobei die zweite Kammer (236) des ersten Gehäuses (226) zwischen der ersten Kammer (232) des ersten Gehäuses (226) und der Pipeline (104) des Prozesssystems positioniert ist und die vierte Kammer (254) des zweiten Gehäuses (244) zwischen der dritten Kammer (250) des zweiten Gehäuses (244) und der Pipeline (104) positioniert ist.

4. Steuerventilanordnung (100) nach einem der vorhergehenden Ansprüche, wobei eine Druckdifferenz über dem ersten Kolben, die durch das Steuerfluid (220) und das Prozessfluid (235) bereitgestellt wird, den ersten Kolben zwischen einer ersten Position und einer zweiten Position bewegen soll.

5. Steuerventilanordnung (100) nach einem der vorhergehenden Ansprüche, wobei die dritte Kammer (250) des zweiten Gehäuses (244) mit der ersten Kammer (232) des ersten Gehäuses (226) fluidtechnisch gekoppelt ist.

6. Steuerventilanordnung (100) nach einem der vorhergehenden Ansprüche, die ferner einen Motor (122) und eine Pumpe (120) umfasst, um die erste Kammer (232) des ersten Gehäuses (226) erneut zu füllen, wenn die erste Kammer (232) entleert wird.

7. Steuerventilanordnung (100) nach einem der Ansprüche 1-5, die ferner einen Schaltaktivierer (262) umfasst, der mit dem zweiten Kolben (246) gekoppelt ist, um einen Schalter zu aktivieren, um einen Motor (122) und eine Pumpe (120) zu aktivieren, wenn das Volumen der ersten Kammer (232) des ersten Gehäuses (226) minimal ist.

8. Steuerventilanordnung (100) nach einem der vorhergehenden Ansprüche, wobei das erste Gehäuse (226) eine erste Stirnkappe (238), die mit einem ersten Ende (226a) in der Nähe der ersten Kammer (232) gekoppelt ist, und eine zweite Stirnkappe (242), die mit einem zweiten Ende (226b) in der Nähe der zweiten Kammer (234) gekoppelt ist, besitzt, wobei die zweite Stirnkappe (242) ein konisch zulaufendes Profil oder eine konisch zulaufende Form hat.

9. Steuerventilanordnung (100) nach einem der vorhergehenden Ansprüche, wobei eine erste Fläche einer ersten Seite des ersten Kolbens (228) im Wesentlichen gleich einer zweiten Fläche einer zweiten Seite des ersten Kolbens (228) ist.

10. Steuerventilanordnung (100) nach Anspruch 9, wobei eine dritte Fläche einer dritten Seite des zweiten Kolbens (246) kleiner als eine vierte Fläche einer vierten Seite des zweiten Kolbens (246) ist.

11. Steuerventilanordnung (100) nach einem der vorhergehenden Ansprüche, wobei der Aktor (118) ein Drehflügelaktor ist, der einen Flügel (202) besitzt, der einen ersten Hohlraum und einem zweiten Hohlraum definiert, ferner umfassend:
eine Richtungssteuereinheit (132) zum Lenken eines Fluidflusses zwischen der ersten Kammer (232) des ersten Gehäuses (226) und dem ersten Hohlraum und/oder dem zweiten Hohlraum des Aktors (118);
wobei die dritte Kammer (250) des zweiten Gehäuses (244) mit der ersten Kammer (232) des ersten Gehäuses (226) fluidtechnisch gekoppelt ist.

12. Steuerventilanordnung (100) nach Anspruch 11, wobei die Richtungssteuereinheit (132) verhindert, dass Steuerfluid (220) in der ersten Kammer (232) des ersten Gehäuses (226) und in der dritten Kammer (250) des zweiten Gehäuses (244) in den ersten Hohlraum und/oder in den zweiten Hohlraum des Aktors fließt, um die erste Kammer (232) des ersten Gehäuses (226) wieder mit dem mit Druck beaufschlagten Steuerfluid (220) zu füllen.

13. Steuerventilanordnung (100) nach einem der vorhergehenden Ansprüche, wobei die erste und die zweite Kammer (236) des ersten Gehäuses (226) und die dritte und die vierte Kammer (250, 254) des zweiten Gehäuses (244) über der Prozessfluid-Pipeline (104) positioniert sind.

## Revendications

1. Ensemble à soupape de commande (100), comprenant :
une conduite de transport de fluide de traitement (104) ;
une soupape (106) pour commander un écoulement de fluide de traitement à travers la conduite de transport (104) ;
un actionneur (118) pour actionner la soupape (106) ;
un appareil hydraulique de commande (102) pour faire fonctionner l'actionneur (118), l'appareil hydraulique de commande (102) comprenant :
un premier logement (226) ayant un premier piston (228) définissant une première chambre (232) et une deuxième chambre (236), la première chambre (232) étant destinée à recevoir un fluide de commande (220) et la deuxième chambre (236) étant destinée à recevoir le fluide de traitement (235) à partir de la conduite de transport de fluide de traitement (104), la première chambre (232) étant orientée au-dessus de la deuxième chambre (236) ; et
un second logement (244) ayant un second piston (246) définissant une troisième chambre (250) et une quatrième chambre (254), la troisième chambre (250) étant destinée à recevoir le fluide de commande (220) et la quatrième chambre (254) étant destinée à recevoir le fluide de traitement (235), la troisième chambre (250) étant orientée au-dessus de la quatrième chambre (254).

2. Ensemble à soupape de commande (100) selon la revendication 1, dans lequel le premier logement (226) et le second logement (244) sont agencés dans une orientation sensiblement verticale.

3. Ensemble à soupape de commande (100) selon la revendication 2, dans lequel la deuxième chambre (236) du premier logement (226) est positionnée entre la première chambre (232) du premier logement (226) et la conduite de transport (104) du système de traitement, et la quatrième chambre (254) du second logement (244) est positionnée entre la troisième chambre (250) du second logement (244) et la conduite de transport (104).

4. Ensemble à soupape de commande (100) selon l'une quelconque des revendications précédentes, dans lequel une pression différentielle, d'un côté à l'autre du premier piston, fournie par le fluide de commande (220) et le fluide de traitement (235) est destinée à entraîner le mouvement du premier piston entre une première position et une seconde position.

5. Ensemble à soupape de commande (100) selon l'une quelconque des revendications précédentes, dans lequel la troisième chambre (250) du second logement (244) est fluidiquement accouplée à la première chambre (232) du premier logement (226).

6. Ensemble à soupape de commande (100) selon l'une quelconque des revendications précédentes, comprenant en outre un moteur (122) et une pompe (120) pour recharger la première chambre (232) du premier logement (226) lorsque la première chambre (232) est déchargée.

7. Ensemble à soupape de commande (100) selon l'une quelconque des revendications 1 à 5, comprenant en outre un activateur d'interrupteur (262) accouplé au second piston (246) pour activer un interrupteur pour faire fonctionner un moteur (122) et une pompe (120) lorsque le volume de la première chambre (232) du premier logement (226) est à un minimum.

8. Ensemble à soupape de commande (100) selon l'une quelconque des revendications précédentes, dans lequel le premier logement (226) a un premier bouchon d'extrémité (238) accouplé à une première extrémité (226a) de façon adjacente à la première chambre (232) et un second bouchon d'extrémité (242) accouplé à une seconde extrémité (226b) de façon adjacente à la deuxième chambre (234), le second bouchon d'extrémité (242) ayant un profil ou une forme effilé(e).

9. Ensemble à soupape de commande (100) selon l'une quelconque des revendications précédentes, dans lequel une première superficie d'un premier côté du premier piston (228) est sensiblement égale à une deuxième superficie d'un deuxième côté du premier piston (228).

10. Ensemble à soupape de commande (100) selon la revendication 9, dans lequel une troisième superficie d'un troisième côté du second piston (246) est inférieure à une quatrième superficie d'un quatrième côté du second piston (246).

11. Ensemble à soupape de commande (100) selon l'une quelconque des revendications précédentes, dans lequel l'actionneur (118) est un actionneur à pale rotative ayant une pale (202) définissant une première cavité et une seconde cavité, comprenant en outre :
une unité de commande directionnelle (132) pour diriger un écoulement de fluide entre la première chambre (232) du premier logement (226) et au moins une de la première cavité ou de la seconde cavité de l'actionneur (118) ;
dans lequel la troisième chambre (250) du second logement (244) est fluidiquement accouplée à la première chambre (232) du premier logement (226).

12. Ensemble à soupape de commande (100) selon la revendication 11, dans lequel l'unité de commande directionnelle (132) empêche le fluide de commande (220) dans la première chambre (232) du premier logement (226) et la troisième chambre (250) du second logement (244) de s'écouler jusqu'à au moins une de la première cavité ou de la seconde cavité de l'actionneur pour recharger la première chambre (232) du premier logement (226) avec le fluide de commande mis sous pression (220).

13. Ensemble à soupape de commande (100) selon l'une quelconque des revendications précédentes, dans lequel les première et deuxième chambres (236) du premier logement (226) et les troisième et quatrième chambres (250, 254) du second logement (244) sont positionnées au-dessus de la conduite de transport de fluide de traitement (104).
